# EUROPEAN PATENT SPECIFICATION

(11) **EP 3 255 185 B1**
(45) Date of publication and mention of the grant of the patent: **15.07.2020**
(21) Application number: 17174716.5
(22) Date of filing: 07.06.2017
(51) Int. Cl.: D02J 1/08

(54) **INTERLACE IMPARTING MECHANISM**
INTERLACE-VERMITTLUNGSMECHANISMUS
MÉCANISME CONFÉRANT UN ENTRELACEMENT

(30) Priority: 10.06.2016 JP 2016115882
(43) Date of publication of application: 13.12.2017
(73) Proprietor: TMT Machinery, Inc., Osaka-shi, Osaka 541-0041 (JP)
(72) Inventor: Sugiyama, Kenji, Kyoto, 612-8686 (JP); Inui, Toshiya, Kyoto, 612-8686 (JP)
(74) Representative: Hoffmann Eitle

(56) References cited:
- DE-A1-102008 018 395
- JP-A- H11 323 681
- US-A- 3 791 105

## Description

### BACKGROUND OF THE INVENTION

The present invention relates to an interlace imparting mechanism configured to interlace yarns.

A known method of producing yarns includes a step of applying oil to a yarn spun out from a spinning apparatus and a step of interlacing the yarn to which the oil has been applied. In this regard, a well-known interlacing device for interlacing yarns is arranged such that interlacing is imparted based on a fluid action by spraying fluid onto the yarns. In such an interlacing device, because fluid is sprayed onto a yarn to which oil has been applied, the oil scatters from the yarn and becomes atomized, with the result that oil mist is generated. For preventing contamination of devices due to the oil mist, for example, Patent Literature 1 (Japanese Unexamined Patent Publication No. H11-323681) recites a technology of collecting the oil mist by a sucking unit, related to the preamble of claim 1.

### SUMMARY OF THE INVENTION

To certainly collect the oil mist by the device recited in Patent Literature 1, the sucking unit must have sufficiently high suction force. This, however, increases the cost for the sucking unit. In particular, an interlacing device which simultaneously interlaces plural yarns is recently popular in order to improve the efficiency in producing yarns. In such an interlacing device, oil mist is generated in a wide range, and hence a large amount of oil mist cannot be sufficiently collected by the sucking unit.

In consideration of the above, an object of the present invention is to certainly collect oil mist scattering from an interlacing device with low cost.

The present invention relates to an interlace imparting mechanism comprising: an interlacing device configured to interlace a yarn by spraying fluid onto the yarn to which oil has been applied; and an oil collector configured to collect oil mist scattering from the interlacing device, the oil collector including: a housing into which the fluid ejected from the interlacing device flows; a filter provided inside the housing to transform the oil mist into oil droplets; and a collection member which collects the oil droplets formed by the filter.

According to the present invention, when the fluid ejected from the interlacing device flows into the housing, the oil mist scattering from the interlacing device flows into the housing together with the fluid, with the result that the oil mist is transformed to oil droplets by the filter provided inside the housing. The oil droplets formed by the filter is collected by the collection member. To put it differently, according to the present invention, by utilizing the stream of the fluid ejected from the interlacing device, it is possible to certainly collect oil mist with low cost and without using an air compressing device such as a sucking unit.

The present invention is preferably arranged such that the interlacing device includes a guide member which is configured to cause the fluid ejected from the interlacing device to head toward the inside of the housing.

With such a guide member, it is possible to actively cause the fluid ejected from the interlacing device to flow into the housing. This facilitates the oil mist scattering from the interlacing device to flow into the housing together with the fluid, with the result that the oil mist is further effectively collected.

The present invention is preferably arranged such that the interlacing device includes: an interlacing portion having a yarn running space in which the yarn runs and an ejection orifice through which the fluid is sprayed onto the yarn running in the yarn running space; a base supporting the interlacing portion; and a regulating member which protrudes from the base and intersects with an extension line of the yarn running space, in order to regulate running of the yarn, and the regulating member functions as the guide member.

In the interlacing device arranged in this manner, the fluid ejected from the ejection orifice of the interlacing portion flows in the yarn running space and is ejected from the yarn running space. The fluid ejected from the yarn running space is guided away from the base by the regulating member. As such, because the regulating member functions as the guide member, i.e., the housing is disposed at a position toward which the fluid is guided by the regulating member, it is unnecessary to additionally provide a guide member and hence it is possible to restrain the increase in the number of components.

The present invention is preferably arranged such that a guider configured to guide the oil droplets formed by the filter to the collection member is provided vertically below the filter.

As the guider is provided vertically below the filter, the oil droplets dropping from the filter are guided to the collection member by the guider. This prevents devices and components from being contaminated by the oil droplets dropping from the filter.

The present invention is preferably arranged such that the guider is formed of at least one sheet-shaped mesh member.

By suitably determining the mesh size of the mesh member, it is possible to allow the oil mist to pass through while preventing the dropping of the oil droplets by utilizing the capillary force of the mesh. In this way, the guider is easily formed by using the mesh member.

The present invention is preferably arranged such that the guider is formed by laminating the mesh members.

As the mesh members are laminated, the capillary force of the meshes is improved, and hence the dropping of the oil droplets from the guider is further effectively restrained.

The present invention is preferably arranged such that the mesh members include at least two mesh members which are different in mesh size.

When the guider includes at least two mesh members which are different in mesh size, the degree of freedom in adjustment of the capillary force and the surface tension exerted to the oil droplets is improved. This makes it possible to certainly restrain the dropping of the oil droplets from the guider and to properly guide the oil droplets to the collection member.

The present invention is preferably arranged such that the housing includes a door which is movable between a closed position and an open position, at least a part of the interlacing device is covered when the door is at the closed position, and the interlacing device is exposed when the door is at the open position.

When the interlacing device is covered with the housing, the scattering of the oil mist to the outside of the housing is restrained but the housing obstructs operations such as yarn threading onto the interlacing device. In this regard, with the door described above, the scattering of the oil mist to the outside is restrained as the door is at the closed position during yarn production, whereas operations such as yarn threading are smoothly done as the door is at the open position during the yarn threading.

The present invention is preferably arranged such that the housing includes a main body portion and a filter housing portion which is detachable from the main body portion and houses the filter.

With this arrangement, the replacement and cleaning of the filter can be easily done as the filter housing portion is detached from the main body portion.

The present invention is preferably arranged such that the housing includes a second door which becomes openable and closable after the filter housing portion is detached from the main body portion.

The filter housing portion is detached from the main body portion when the filter is replaced or cleaned. In this regard, as the second door is openable and closable,
the cleaning of the inside of the housing can be done simultaneously, with the result that the ease of maintenance of the oil collector is improved. The second door is, to put it differently, not openable when the filter housing portion is attached to the main body portion. This prevents the occurrence of an accident that the second door is unintentionally opened during the production of the yarn and the oil mist leaks out from the housing.

The present invention is arranged such that the housing is a duct member which extends linearly, or curved, or bended and the fluid ejected from the interlacing device flows into the duct member from one end of the duct member, passes through the filter, and then flows out from the duct member from another end of the duct member.

As the duct member is linearly structured in this way, the fluid having flown into the duct member smoothly passes through the filter without stagnating or flowing backward in the duct member. As a result, the oil mist flowing in the duct member together with the fluid is further certainly transformed into the oil droplets by the filter, and hence the efficiency in the collection of the oil mist is improved.

### BRIEF DESCRIPTION OF THE DRAWINGS

FIG. 1 is a schematic diagram of a spun yarn take-up apparatus including an interlace imparting mechanism according to an embodiment.
FIG. 2 is a perspective view of an interlacing device.
FIG. 3 is a cross section taken along the III-III line in FIG. 2.
FIG. 4 is a cross section of an oil collector.
FIG. 5 is a perspective view of the oil collector when a door is at a closed position.
FIG. 6 is a perspective view of the oil collector when the door is at an open position.
FIG. 7 is a perspective view of the oil collector when a filter housing portion is detached.
FIG. 8 is a perspective view of the oil collector when a second door is open.
FIG. 9 is a cross section of an oil collector of a modification.
FIG. 10 is a cross section of an oil collector of another embodiment.

### DESCRIPTION OF THE PREFERRED EMBODIMENTS

### (Outline of Spun Yarn Take-Up Apparatus)

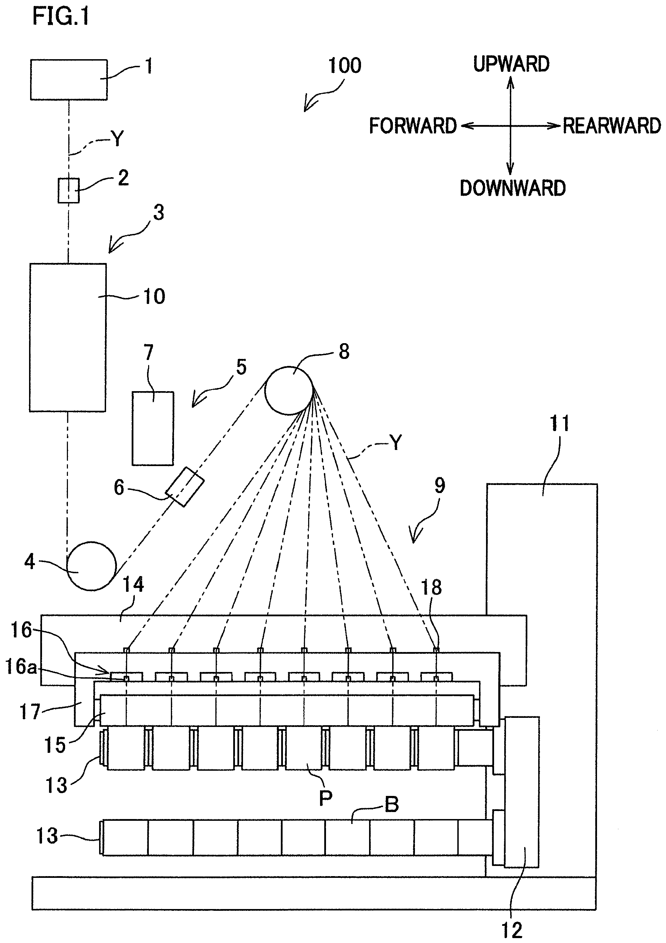

The following will describe an embodiment of the present invention. FIG. 1 is a schematic diagram of a spun yarn take-up apparatus including an interlace imparting mechanism according to the present embodiment. The spun yarn take-up apparatus 100 takes up synthetic fiber yarns Y spun out from a spinning apparatus 1 and forms packages P by winding the yarns Y onto bobbins B, respectively. Hereinafter, upward, downward, forward, and rearward directions shown in FIG. 1 will be referred to as upward, downward, forward, and rearward directions of the spun yarn take-up apparatus 100.

The spun yarn take-up apparatus 100 includes members such as an oil guide 2, a drawing unit 3, take-up rollers 4 and 8, an interlace imparting mechanism 5 including an interlacing device 6 and an oil collector 7, and a winding device 9. From the spinning apparatus 1, polymer which is supplied from a polymer supplier (not illustrated) formed of a gear pump or the like is pushed out downward through a spinneret.

Yarns Y spun out from the spinning apparatus 1 are lined up in the direction vertical to the plane of FIG. 1. While being aligned with a proper yarn pitch by an unillustrated yarn path guide, the yarns Y run on a yarn path which passes the oil guide 2, the drawing unit 3, the take-up roller 4, the interlacing device 6, and the take-up roller 8. The yarns Y are distributed in the front-rear direction from the take-up roller 8, and are then wound onto the bobbins B at the winding device 9.

To the yarns Y spun out from the spinning apparatus 1, oil is applied at the oil guide 2. The yarns Y are then sent to the drawing unit 3. The drawing unit 3 includes a heat retaining box 10 and heating rollers (not illustrated) housed in the heat retaining box 10. By the heating rollers, the drawing unit 3 draws the yarns Y spun out from the spinning apparatus 1, while heating them.

The yarns Y drawn by the drawing unit 3 are sent to the winding device 9 by the take-up rollers 4 and 8. Between the take-up rollers 4 and 8, the interlacing device 6 is provided to interlace the yarns Y by entangling filaments constituting the yarns Y. In the vicinity of the interlacing device 6, the oil collector 7 is provided to collect oil mist scattering from the interlacing device 6. The interlacing device 6 and the oil collector 7 will be detailed later.

The winding device 9 includes members such as a frame 11, a turret 12, two bobbin holders 13, a supporting frame 14, a contact roller 15, and a traverse unit 16. The winding device 9 simultaneously winds the yarns Y sent from the take-up roller 8 onto the bobbins B by rotating the bobbin holder 13, so as to form packages P.

The disc-shaped turret 12 is attached to the frame 11. The turret 12 is rotationally driven by a motor which is not illustrated. By the turret 12, two long cylindrical bobbin holders 13 are cantilevered to extend in the front-rear direction. To each bobbin holder 13, the bobbins B are attached to be lined up along the axis of the bobbin holder 13. As the turret 12 rotates, the positions of the two bobbin holders 13 are switched between an upper winding position and a lower retracted position.

The supporting frame 14 is a frame-shaped member which is long in the front-rear direction. This supporting frame 14 is fixed to the frame 11. To a lower part of the supporting frame 14, a roller supporting member 17 which is long in the front-rear direction is attached to be vertically movable with respect to the supporting frame 14. The roller supporting member 17 rotatably supports the contact roller 15 which extends along the axis of the bobbin holder 13. As this contact roller 15 makes contact with a package P under the formation and the contact roller 15 applies a predetermined contact pressure to the package P, the shape of the package P is adjusted.

To the roller supporting member 17, the traverse unit 16 is attached to be right over the contact roller 15. The traverse unit 16 includes traverse guides 16a which are lined up in the front-rear direction. The traverse guides 16a are driven by a motor (not illustrated) and reciprocate in the front-rear direction. As each traverse guide 16a to which the yarn Y is threaded reciprocates, the yarn Y is wound onto the corresponding bobbin B while being traversed about a fulcrum guide 18.

### (Structure of Interlacing Device)

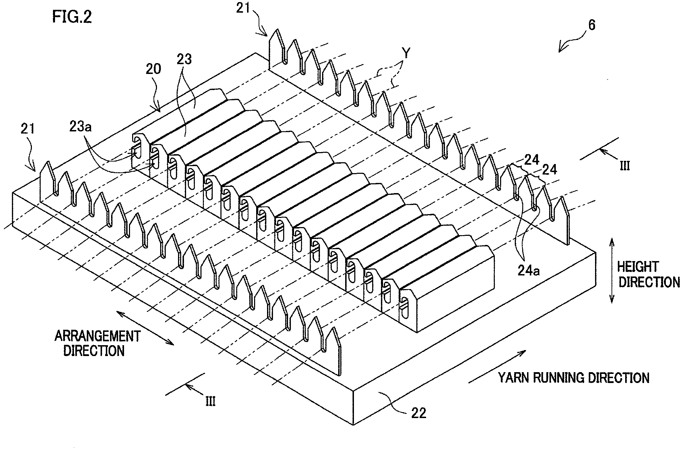

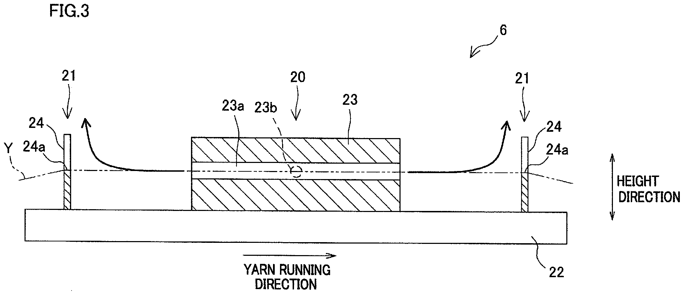

Now, the interlacing device 6 will be detailed. FIG. 2 is a perspective view of the interlacing device 6, whereas FIG. 3 is a cross section taken along the III-III line in FIG. 2. The yarn running direction indicates the direction in which the yarns Y run. The arrangement direction indicates the direction in which the yarns Y are lined up. The height direction is the direction in which an interlacing portion 20 protrudes from a base 22. These directions are orthogonal to one another in the present embodiment, but they may not be orthogonal to one another.

The interlacing device 6 is arranged to impart interlacing to the yarns Y based on a fluid action by spraying fluid (e.g., compressed air) onto the yarns Y. The interlacing device 6 includes the interlacing portion 20 configured to interlace the yarns Y, two regulating members 21 which are separated from the interlacing portion 20 and are on the upstream and downstream of the interlacing portion 20 in the yarn running direction, respectively, and the base 22 supporting the interlacing portion 20 and the regulating members 21. The yarn paths of the yarns Y running at the interlacing portion 20 are defined by the two regulating members 21 provided on the respective sides of the interlacing portion 20 in the yarn running direction.

The interlacing portion 20 is formed by interlacing pieces 23 which are lined up in the arrangement direction. Each interlacing piece 23 is shaped to extend along the yarn running direction and protrudes in the height direction from the base 22. In each interlacing piece 23, a yarn running space 23a is formed to penetrate the interlacing piece 23 in the yarn running direction. The cross sectional shape of the yarn running space 23a is elliptical with the longer axis extending in the height direction. The yarn Y runs at a substantial center of the space along the yarn running direction. An ejection orifice 23b (see FIG. 3) is formed at a central part in the yarn running direction of the interlacing piece 23, and the fluid is ejected from this ejection orifice 23b into the yarn running space 23a. As the yarn Y running in the yarn running space 23a is influenced by the fluid ejected from the ejection orifice 23b, the yarn Y is interlaced. The cross sectional shape of the yarn running space 23a is not limited to elliptical, and may be another shape such as circular or triangular.

The regulating members 21 regulate the running of the yarns Y mainly in the arrangement direction. Each regulating member 21 is constituted by guide portions 24 which are lined up in the arrangement direction to sandwich each of the yarns Y from the both sides in the arrangement direction. Each guide portion 24 has a U-shaped regulating groove 24a formed along the height direction. The yarn Y runs in the regulating groove 24a.

As described above, each regulating member 21 extends on the whole in the arrangement direction like a wall, as the guide portions 24 form a row in the arrangement direction. On this account, the fluid ejected from the ejection orifice 23b into the yarn running space 23a is branched into a stream running in the yarn running space 23a toward the upstream in the yarn running direction and a stream running in the yarn running space 23a toward the downstream in the yarn running direction, and these streams of the fluid are ejected from the both end faces of the interlacing piece 23. The fluid ejected from the both end faces of the interlacing piece 23 flows away from the base 22 due to an influence of the wall-like regulating members 21 which intersect with the extension line of the yarn running space 23a (see the arrows in FIG. 3). In the present embodiment, the regulating members 21 function as guide members of the present invention.

### (Structure of Oil Collector)

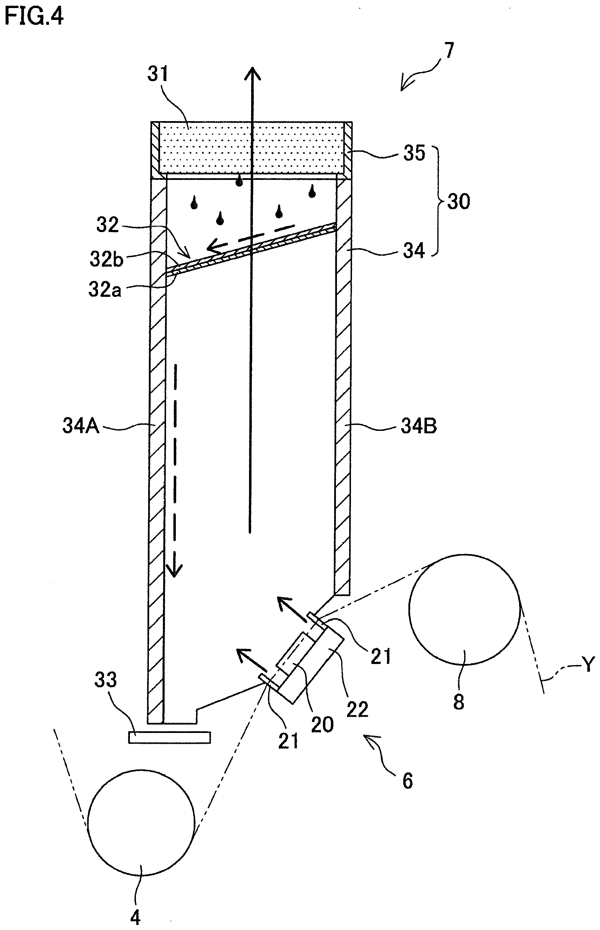

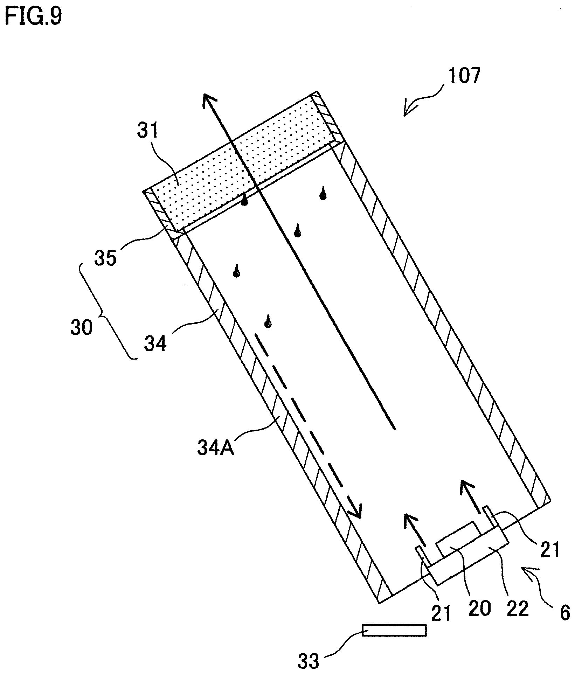

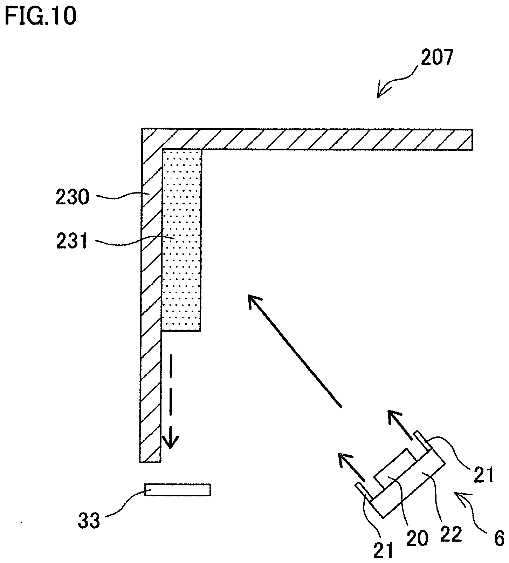

Now, the oil collector 7 will be detailed. FIG. 4 is a cross section of the oil collector 7, to be more specific, is a cross section taken along the direction orthogonal to the arrangement direction. In FIG. 4, the stream of the fluid ejected from the interlacing device 6 is indicated by a full arrow, whereas the stream of oil droplets formed by a later-described filter 31 is indicated by a dotted arrow (the same applies to FIG. 9 and FIG. 10).

The oil collector 7 is provided in the vicinity of the interlacing device 6. As the fluid is sprayed at the interlacing device 6 onto the yarns Y to which the oil has been applied, the oil scatters from the yarns Y, with the result that oil mist is generated. The oil collector 7 is a device for collecting such oil mist scattering from the interlacing device 6. The oil collector 7 includes a duct member 30 linearly extending in the up-down direction, a filter 31 and a guider 32 provided inside the duct member 30, and a collection tray 33 provided directly under the duct member 30. In the present embodiment, the duct member 30 is equivalent to a housing of the present invention and the collection tray 33 is equivalent to a collection member of the present invention.

The duct member 30 includes a main body portion 34 and a filter housing portion 35 which is detachably attached to an upper end portion of the main body portion 34. The main body portion 34 is rectangular parallelepiped in shape and long in the up-down direction, and is open at the upper and lower ends. The filter housing portion 35 is a rectangular parallelepiped box and is open at the upper and lower ends. Therefore, when the filter housing portion 35 is attached to the main body portion 34, the internal space of the main body portion 34 communicates with the internal space of the filter housing portion 35, so that fluid is able to flow from the lower end to the upper end of the duct member 30. The duct member 30 is, for example, fixed to an unillustrated supporter by a bolt, and the duct member 30 is detachable from the supporter after the bolt is taken off.

As shown in FIG. 4, the interlacing device 6 is disposed so that the base 22 is tilted relative to the horizontal direction to cause the regulating members 21 to protrude from the base 22 toward the opening at the lower end of the duct member 30. On this account, when, as described above, the fluid ejected from the interlacing device 6 flows away from the base 22 due to the presence of the regulating members 21 (i.e., flows in the direction in which the regulating members 21 protrude from the base 22), the fluid directly flows into the duct member 30 through the opening at the lower end, as indicated by the full arrows in FIG. 4.

The filter 31 housed in the filter housing portion 35 is, for example, formed of non-woven fabric having a high specific surface area, and is able to transform the oil mist in the fluid ejected from the interlacing device 6 into oil droplets and allows the fluid from which the oil mist has been removed to pass through. To put it differently, the fluid ejected from the interlacing device 6 flows into the duct member 30 through the opening at the lower end of the duct member 30, and the oil mist is removed by the filter 31 and the fluid is purified while the fluid flows upward toward the upper opening. The purified fluid flows out from the duct member 30 through the opening at the upper end of the duct member 30.

When the oil droplets formed by the filter 31 drop from the filter 31, the interlacing device 6 provided vertically below the oil collector 7 may be contaminated with the oil droplets. In the present embodiment, the guider 32 is provided to prevent the oil droplets formed by the filter 31 from dropping on the interlacing device 6 and to guide the oil droplets to the collection tray 33.

The guider 32 is provided in an upper part of the main body portion 34 and vertically below the filter 31. The guider 32 bridges over opposing side faces 34A and 34B of the main body portion 34 and is tilted relative to the horizontal direction so that the end on the side face 34A side is lower than the other end. The collection tray 33 is provided directly under the side face 34A. With this structure, the oil droplets dropping from the filter 31 move to the side face 34A along the guider 32 as indicated by the dotted arrow in FIG. 4, then move downward along the side face 34A, and eventually reach the collection tray 33. The collection tray 33 is a movable member so that the collection tray provided directly below the duct member 30 can be drawn out toward the viewer of FIG. 4.

The guider 32 described above is preferably a member which allows the fluid (air) and the oil mist to pass through but prevents the oil droplets from dropping as much as possible. In the present embodiment, the guider 32 is formed by laminating two metal sheet-shaped mesh members 32a and 32b. The mesh members 32a and 32b are different in mesh size, the lower mesh member 32a is smaller in mesh size than the upper mesh member 32b. The aperture of the mesh member 32a is, for example, about 20µm to 700µm, whereas the aperture of the mesh member 32b is, for example, about 700µm to 1500µm.

When the mesh members 32a and 32b are different in mesh size, the passage vertically penetrating the guider 32 tends to be narrow as the meshes of the mesh members 32a and 32b are deviated from each other. On this account, strong capillary force is exerted to the oil droplets adhering to the guider 32, and hence the dropping of the oil droplets from the guider 32 is restrained. In this connection, when the lower mesh member 32a is small in mesh size as described above, stronger capillary force is exerted to the oil droplets adhering to the lower surface and its surroundings of the guider 32, and hence the dropping of the oil droplets from the guider 32 is further effectively restrained. Alternatively, the mesh size of the lower mesh member 32a may be arranged to be larger than that of the upper mesh member 32b. Alternatively, the mesh size of the lower mesh member 32a may be arranged to be identical with that of the upper mesh member 32b.

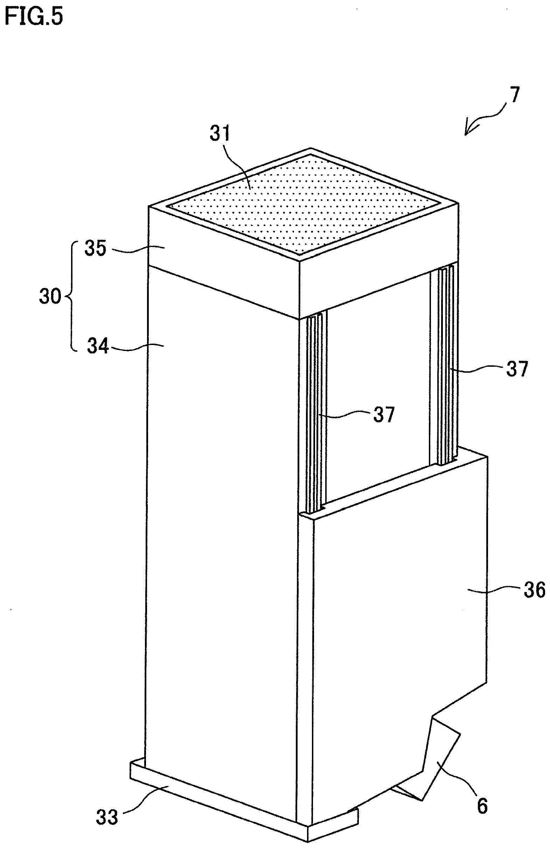

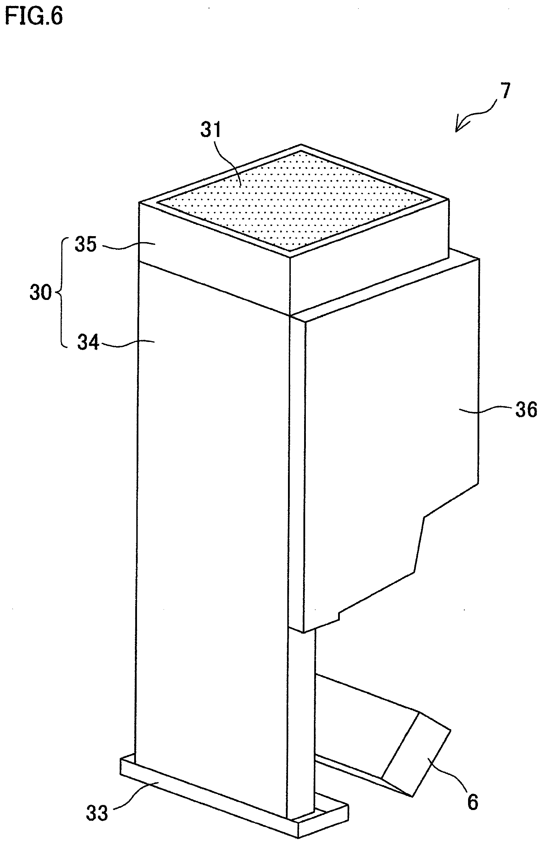

FIG. 5 is a perspective view of the oil collector 7 when a door 36 is at a closed position. FIG. 6 is a perspective view of the oil collector 7 when the door 36 is at an open position. A part of a side face of the main body portion 34 of the duct member 30 is arranged to be an openable and closable door 36. The door 36 is formed across two of the four side faces of the main body portion 34 and is L-shaped in a top view. On a side face of the main body portion 34, paired left and right rails 37 are provided to extend in the up-down direction. The door 36 engaged with the paired rails 37 is movable in the up-down direction between a closed position (shown in FIG. 5) which is the lower position and an open position (shown in FIG. 6) which is the upper position.

As shown in FIG. 5, when the door 36 is at the closed position, a part of a side face of the interlacing device 6 is covered with the door 36. This restrains the oil mist scattering from the interlacing device 6 from leaking out to the outside of the duct member 30. In the meanwhile, as shown in FIG. 6, when the door 36 is at the open position, the interlacing device 6 is exposed, and hence an open space where yarn threading is possible is formed between the door 36 and the interlacing device 6. A lower end portion of the door 36 is shaped so as not to interfere with the yarns Y running at around the interlacing device 6 even when the door 36 is at the closed position.

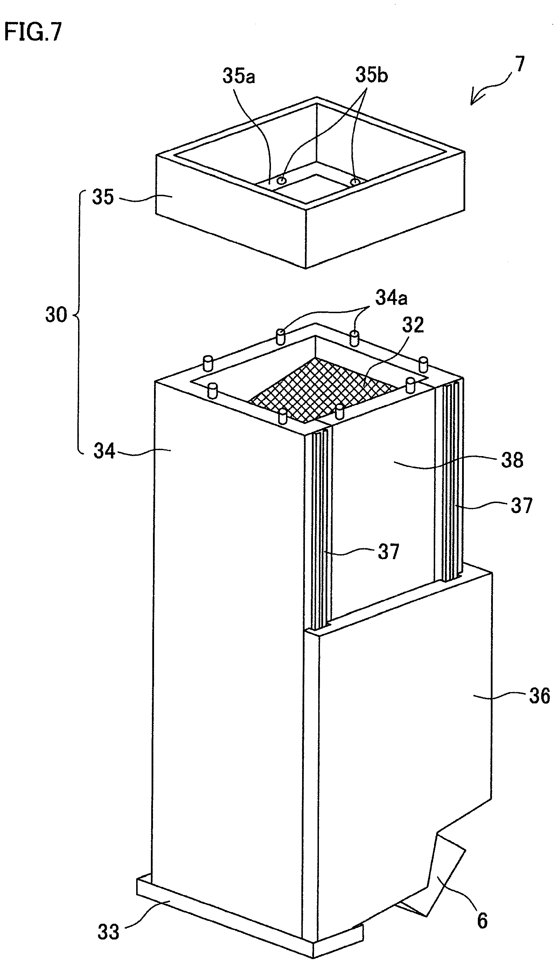

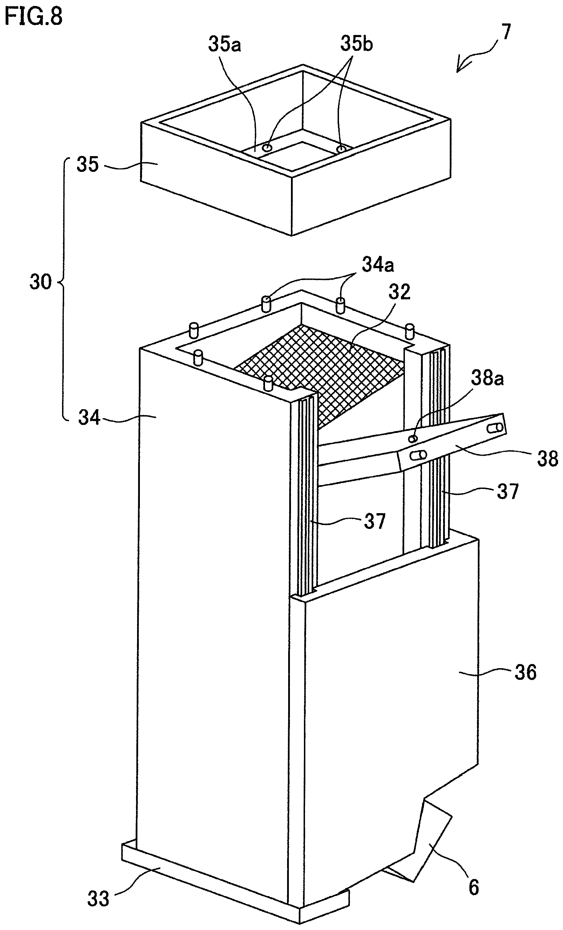

FIG. 7 is a perspective view of the oil collector 7 when the filter housing portion 35 is detached, whereas the FIG. 8 is a perspective view of the oil collector 7 when a second door 38 is open. FIG. 7 and FIG. 8 do not show the filter 31.

At an upper end portion of the main body portion 34, protrusions 34a are formed. At a lower end portion of the filter housing portion 35, a flange portion 35a is formed to protrude inward. In this flange portion 35a, holes 35b are formed to correspond to the respective protrusions 34a. As the protrusions 34a are engaged with the associated holes 35b, the filter housing portion 35 is attached to the upper end portion of the main body portion 34. The filter 31 does not drop off as the filter 31 housed in the filter housing portion 35 is locked by the flange portion 35a.

In addition to the door 36, the second door 38 which is openable and closable is provided on the main body portion 34 of the duct member 30. The second door 38 is formed at a side face part between the paired rails 37. As shown in FIG. 8, when the protrusions 34a are disengaged from the holes 35b as the filter housing portion 35 is detached from the main body portion 34, the second door 38 becomes rotatable about a hinge 38a. When the second door 38 is open (as shown in FIG. 8), an operator is allowed to reach the inside of the main body portion 34 to clean the inside of the main body portion 34 or to detach the guider 32.

It is not prerequisite to form the second door 38 at a side face part between the paired rails 37. For example, the paired rails 37 may be provided at a side face 34B of the main body portion 34. In such a case, if the second door 38 is at the position shown in FIG. 7, the second door 38 is provided at a side face portion of the main body portion 34, which is not between the paired rails 37. The second door 38 is not always required to be rotatable. The second door 38 may be, for example, detachable from the main body portion 34.

### (Advantageous Effects)

As described above, the oil collector 7 of the present embodiment includes the housing (duct member 30) into which the fluid ejected from the interlacing device 6 flows, the filter 31 provided inside the housing 30 to transform the oil mist into oil droplets, and the collection member (collection tray 33) for collecting the oil droplets generated by the filter 31. When the fluid ejected from the interlacing device 6 flows into the housing 30, the oil mist scattering from the interlacing device 6 flows into the housing 30 together with the fluid, with the result that the oil mist is transformed to oil droplets by the filter 31 provided inside the housing 30. The oil droplets formed by the filter 31 is collected by the collection member 33. To put it differently, by utilizing the stream of the fluid ejected from the interlacing device 6, the oil collector 7 of the present embodiment makes it possible to certainly collect oil mist with low cost and without using an air compressing device such as a sucking unit.

When a so-called multi-type interlacing device 6 configured to interlace plural yarns Y as in the present embodiment deals with a large number of yarns as compared to conventional cases, oil mist is generated in a wide range. Such oil mist cannot be sufficiently sucked by a sucking unit because of the significant increase in size of the equipment and the significant increase of the consumption of compressed air. In this regard, with the oil collector 7 of the present embodiment, oil mist in a wide range is collectable with not so much increase in cost, by increasing the size of the housing 30 in accordance with the size of the interlacing device 6. This is particularly effective for the multi-type interlacing device 6.

In the present embodiment, the interlacing device 6 includes the guide members (regulating members 21) which cause the fluid ejected from the interlacing device 6 to head toward the inside of the housing 30. With such guide members 21, it is possible to actively cause the fluid ejected from the interlacing device 6 to flow into the housing 30. This facilitates the oil mist scattering from the interlacing device 6 to flow into the housing 30 together with the fluid, with the result that the oil mist is further effectively collected.

In the present embodiment, the interlacing device 6 includes the interlacing portion 20 having the yarn running space 23a in which the yarns Y run and the ejection orifice 23b through which the fluid is sprayed onto the yarns Y running in the yarn running space 23a, the base 22 supporting the interlacing portion 20, and the regulating members 21 which protrude from the base 22 and intersect with the extension line of the yarn running space 23a in order to regulate the running of the yarns Y, and the regulating members 21 function as the guide members. In the interlacing device 6 arranged in this manner, the fluid ejected from the ejection orifice 23b of the interlacing portion 20 flows in the yarn running space 23a and is ejected from the yarn running space 23a. The fluid ejected from the yarn running space 23a is guided away from the base 22 by the regulating members 21. As such, because the regulating members 21 function as the guide members, i.e., the housing 30 is disposed at a position toward which the fluid is guided by the regulating members 21, it is unnecessary to additionally provide a guide member and hence it is possible to restrain the increase in the number of components.

In the present embodiment, the guider 32 is provided vertically below the filter 31 to guide the oil droplets formed by the filter 31 to the collection member 33. As the guider 32 is provided vertically below the filter 31, the oil droplets dropping from the filter 31 are guided to the collection member 33 by the guider 32. This prevents devices and components from being contaminated by the oil droplets dropping from the filter 31.

In the present embodiment, the guider 32 is formed of sheet-shaped mesh members 32a and 32b. By suitably determining the mesh sizes of the mesh members 32a and 32b, it is possible to allow the oil mist to pass through while preventing the dropping of the oil droplets by utilizing the capillary force of the meshes. In this way, the guider 32 is easily formed by using the mesh members 32a and 32b.

In the present embodiment, the guider 32 is formed by laminating mesh members 32a and 32b. As the mesh members 32a and 32b are laminated, the capillary force of the meshes is improved, and hence the dropping of the oil droplets from the guider 32 is further effectively restrained.

In the present embodiment, the mesh members 32a and 32b include at least two mesh members 32a and 32b which are different in mesh size. When the guider 32 includes at least two mesh members 32a and 32b which are different in mesh size, the degree of freedom in adjustment of the capillary force and the surface tension exerted to the oil droplets is improved. This makes it possible to certainly restrain the dropping of the oil droplets from the guider 32 and to properly guide the oil droplets to the collection member 33.

In the present embodiment, the housing 30 includes the door 36 movable between the closed position and the open position, at least a part of the interlacing device 6 is covered when the door 36 is at the closed position, and the interlacing device 6 is exposed when the door 36 is at the open position. When the interlacing device 6 is covered with the housing 30, the scattering of the oil mist to the outside of the housing 30 is restrained but the housing 30 obstructs operations such as yarn threading onto the interlacing device 6. In this regard, with the door 36 described above, the scattering of the oil mist to the outside is restrained as the door 36 is at the closed position during yarn production, whereas yarn threading is smoothly done as the door 36 is at the open position during the yarn threading.

In the present embodiment, the housing 30 includes the main body portion 34 and the filter housing portion 35 which is detachable from the main body portion 34 and houses the filter 31 therein. With this arrangement, the replacement and cleaning of the filter 31 can be easily done as the filter housing portion 35 is detached from the main body portion 34.

In the present embodiment, the housing 30 includes the second door 38 which becomes openable and closable after the filter housing portion 35 is detached from the main body portion 34. The filter housing portion 35 is detached from the main body portion 34 when the filter 31 is replaced or cleaned. In this regard, as the second door 38 is openable and closable, the cleaning of the inside of the housing 30 can be done simultaneously, with the result that the ease of maintenance of the oil collector 7 is improved. The second door 38 is, to put it differently, not openable when the filter housing portion 35 is attached to the main body portion 34. This prevents the occurrence of an accident that the second door 38 is unintentionally opened during the production of the yarns Y and the oil mist leaks out from the housing 30.

In the present embodiment, the housing 30 is the duct member 30 which linearly extends, and the fluid ejected from the interlacing device 6 flows into the duct member 30 from one end of the duct member 30 and flows out from the duct member 30 from the other end of the duct member 30 after passing through the filter 31. As the duct member 30 is linearly structured in this way, the fluid having flown into the duct member 30 smoothly passes through the filter 31 without stagnating or flowing backward in the duct member 30. As a result, the oil mist flowing in the duct member 30 together with the fluid is further certainly transformed into the oil droplets by the filter 31, and hence the efficiency in the collection of the oil mist is improved.

### (Modifications)

FIG. 9 is a cross section of an oil collector 107 of a modification of the embodiment above, to be more specific, is a cross section taken along the direction orthogonal to the arrangement direction in the interlacing device 6. It should be noted that the components having the same structures as those in the above-described embodiment are given the same reference numerals.

The oil collector 107 of the modification is different from the oil collector 7 of the embodiment above in that the duct member 30 is tilted. To be more specific, the duct member 30 is tilted so that the longitudinal direction of the duct member 30 is substantially in parallel to the direction in which the regulating members 21 protrude from the base 22. With this arrangement, the direction in which the fluid is ejected from the interlacing device 6 is substantially identical with the longitudinal direction of the duct member 30. As a result, the oil mist scattering from the interlacing device 6 is further certainly arranged to flow into the duct member 30 together with the fluid ejected from the interlacing device 6, and hence the oil mist is efficiently collected.

In the modification, the right end of the filter 31 in FIG. 9 (i.e., the end opposite to the side on which the collection tray 33 is provided) is positioned to the left of the lower end of the side face 34A (i.e., on the side on which the collection tray 33 is provided). To put it differently, the side face 34A is positioned vertically below the filter 31. On this account, the oil droplets formed by the filter 31 drop onto the side face 34A, and hence the dropping of the oil droplets onto the interlacing device 6 is avoided even if the guider 32 is not provided.

### (Other embodiments)

Although the embodiment of the present invention has been described, the present invention is not limited to the above and can be suitably changed within the scope of the present invention as described in the examples below.

In the embodiment above, the duct member 30 which linearly extends is provided as the housing of the present invention. The duct member 30, however, may not be linear. The duct member 30 may be curved or bended. Furthermore, for example, the housing of the present invention may be arranged such that an L-shaped member 230 which is L-shaped in cross section is provided and a filter 231 is provided at a side face inside the L-shaped member 230, as indicated by an oil collector 207 shown in FIG. 10.

In the embodiment above, the regulating members 21 regulating the running of the yarns Y in the interlacing device 6 function as the guide members of the present invention. The guide member of the present invention, however, is not limited this. For example, in addition to the regulating members 21, a dedicated guide member may be provided to cause the fluid ejected from the interlacing device 6 to head toward the inside of the duct member 30.

In the embodiment above, the movable collection tray 33 is provided as the collection member of the present invention. Alternatively, the collection tray 33 may be of a fixed type and an oil ejection drain may be connected with the collection tray 33 for ejecting oil therefrom. Alternatively, as the collection member of the present invention, an oil ejection drain may be directly connected with the lower end portion of the side face 34A of the duct member 30.

In the present embodiment, the guider 32 is formed by laminating mesh members 32a and 32b. Alternatively, the guide member may be formed by a single mesh member. Furthermore, the guider 32 may not be formed of a mesh member.

In the embodiment above, the filter housing portion 35 housing the filter 31 therein is a member different from the main body portion 34, and the filter housing portion 35 is detachably attached to the main body portion 34. In this regard, the filter housing portion 35 may not be detachable. Furthermore, the filter housing portion 35 may not be provided, and the filter 31 may be provided inside the main body portion 34.

In the embodiment above, the door 36 and the second door 38 are provided on the duct member 30 in consideration of convenience such as maintenance. In this regard, the shape and position of each of the door 36 and the second door 38 are suitably changeable, and these doors 36 and 38 may be omitted.

In the embodiment above, the interlacing device 6 is a so-called multi-type interlacing device configured to interlace plural yarns Y. Alternatively, the interlacing device 6 may be of a so-called single-type, which interlaces a single yarn Y.

In the embodiment above, a sensor or a switch may be provided to determine whether the door 36 is at the closed position during the winding of the yarns Y. Furthermore, a sensor or a switch may be provided to determine whether the filter housing portion 35 is attached to the main body portion 34 during the winding of the yarns Y. To notify an operator of a determination result from each sensor or switch above, a notification unit (e.g., an indicator lamp) may be provided. With these arrangements, it is possible to prevent an operator from forgetting to move the door 36 to the closed position after yarn threading and to prevent an operator from forgetting to attach the filter housing portion 35 to the main body portion 34 after the maintenance of the filter 31.

## Claims

1. An interlace imparting mechanism (5) comprising:
an interlacing device (6) configured to interlace a yarn (Y) by spraying fluid onto the yarn (Y) to which oil has been applied; and
an oil collector (7) configured to collect oil mist scattering from the interlacing device (6),
the oil collector (7) including:
a housing (30) into which the fluid ejected from the interlacing device (6) flows;
a filter (31) provided inside the housing to transform the oil mist into oil droplets; and
a collection member (33) which collects the oil droplets formed by the filter (31),
**characterized in that**
the housing (30) is a duct member (30) which extends linearly, or curved, or bended, and
the fluid ejected from the interlacing device (6) flows into the duct member (30) from one end of the duct member (30), passes through the filter (31), and then flows out from the duct member (30) from another end of the duct member (30).

2. The interlace imparting mechanism (5) according to claim 1, wherein, the interlacing device (6) includes a guide member which is configured to cause the fluid ejected from the interlacing device (6) to head toward the inside of the housing (30).

3. The interlace imparting mechanism (5) according to claim 2, wherein,
the interlacing device (6) includes:
an interlacing portion (20) having a yarn running space (23a) in which the yarn (Y) runs and an ejection orifice (23b) through which the fluid is sprayed onto the yarn (Y) running in the yarn running space (23a);
a base (22) supporting the interlacing portion (20); and
a regulating member (21) which protrudes from the base (22) and intersects with an extension line of the yarn running space (23a), in order to regulate running of the yarn (Y), and
the regulating member (21) functions as the guide member (21).

4. The interlace imparting mechanism (5) according to any one of claims 1 to 3, wherein, a guider (32) configured to guide the oil droplets formed by the filter (31) to the collection member (33) is provided vertically below the filter (31), and the interlacing device (6) is provided vertically below the oil collector (7).

5. The interlace imparting mechanism (5) according to claim 4, wherein, the guider (32) is formed of at least one sheet-shaped mesh member (32a, 32b).

6. The interlace imparting mechanism (5) according to claim 5, wherein, the guider (32) is formed by laminating the mesh members (32a, 32b).

7. The interlace imparting mechanism (5) according to claim 6, wherein, the mesh members include at least two mesh members (32a, 32b) which are different in mesh size.

8. The interlace imparting mechanism (5) according to any one of claims 1 to 7, wherein,
the housing (30) includes a door (36) which is movable between a closed position and an open position,
at least a part of the interlacing device (6) is covered when the door (36) is at the closed position, and the interlacing device (6) is exposed when the door (36) is at the open position.

9. The interlace imparting mechanism (5) according to any one of claims 1 to 8, wherein, the housing (30) includes a main body portion (34) and a filter housing portion (35) which is detachable from the main body portion (34) and houses the filter (31).

10. The interlace imparting mechanism (5) according to claim 9, wherein, the housing (30) includes a second door (38) which becomes openable and closable after the filter housing portion (35) is detached from the main body portion (34).

## Patentansprüche

1. Mechanismus zum Verleihen einer Verflechtung (5), umfassend:
eine Verflechtungsvorrichtung (6), die ausgestaltet ist, ein Garn (Y) zu verflechten, indem Fluid auf das Garn (Y) gesprüht wird, auf das Öl aufgebracht wurde; und
einen Ölsammler (7), der ausgestaltet ist, Ölnebel zu sammeln, der von der Verflechtungsvorrichtung (6) verstreut wird,
der Ölsammler (7) beinhaltend:
ein Gehäuse (30), in das das Fluid fließt, das von der Verflechtungsvorrichtung (6) ausgestoßen wird;
ein Filter (31), das im Inneren des Gehäuses bereitgestellt ist, um den Ölnebel in Öltröpfchen umzuformen; und
ein Sammelelement (33), das die Öltröpfchen sammelt, die durch das Filter (31) gebildet werden,
**dadurch gekennzeichnet, dass**
das Gehäuse (30) ein Kanalelement (30) ist, das sich linear oder gekrümmt oder gebogen erstreckt, und
das Fluid, das aus der Verflechtungsvorrichtung (6) ausgestoßen wird, von einem Ende des Kanalelements (30) in das Kanalelement (30) fließt, durch das Filter (31) geht und dann aus einem anderen Ende des Kanalelements (30) aus dem Kanalelement (30) fließt.

2. Mechanismus zum Verleihen einer Verflechtung (5) nach Anspruch 1, wobei die Verflechtungsvorrichtung (6) ein Führungselement beinhaltet, das ausgestaltet ist, das Fluid, das aus der Verflechtungsvorrichtung (6) ausgestoßen wird, zu veranlassen, sich zur Innenseite des Gehäuses (30) zu bewegen.

3. Mechanismus zum Verleihen einer Verflechtung (5) nach Anspruch 2, wobei die Verflechtungsvorrichtung (6) beinhaltet:
einen Verflechtungsabschnitt (20), der einen Garndurchlaufraum (23a), in dem das Garn (Y) läuft, und eine Ausstoßöffnung (23b), durch die das Fluid auf das Garn (Y) gesprüht wird, das im Garndurchlaufraum (23a) läuft, aufweist;
eine Basis (22), die den Verflechtungsabschnitt (20) stützt; und
ein Regulierungselement (21), das von der Basis (22) vorsteht und eine Verlängerungslinie des Garndurchlaufraums (23a) schneidet, um einen Durchlauf des Garns (Y) zu regulieren, und
das Regulierungselement (21) als das Führungselement (21) dient.

4. Mechanismus zum Verleihen einer Verflechtung (5) nach einem der Ansprüche 1 bis 3, wobei eine Führung (32), die ausgestaltet ist, die Öltröpfchen, die durch das Filter (31) gebildet werden, zu dem Sammelelement (33) zu führen, vertikal unter dem Filter (31) bereitgestellt ist, und die Verflechtungsvorrichtung (6) vertikal unter dem Ölsammler (7) bereitgestellt ist.

5. Mechanismus zum Verleihen einer Verflechtung (5) nach Anspruch 4, wobei die Führung (32) aus mindestens einem blattförmigen Netzelement (32a, 32b) gebildet ist.

6. Mechanismus zum Verleihen einer Verflechtung (5) nach Anspruch 5, wobei die Führung (32) durch Laminieren der Netzelemente (32a, 32b) gebildet ist.

7. Mechanismus zum Verleihen einer Verflechtung (5) nach Anspruch 6, wobei die Netzelemente mindestens zwei Netzelemente (32a, 32b) beinhalten, die sich in Netzgröße unterscheiden.

8. Mechanismus zum Verleihen einer Verflechtung (5) nach einem der Ansprüche 1 bis 7, wobei
das Gehäuse (30) eine Tür (36) beinhaltet, die zwischen einer geschlossenen Position und einer offenen Position beweglich ist,
mindestens ein Teil der Verflechtungsvorrichtung (6) bedeckt ist, wenn die Tür (36) in der geschlossenen Position ist, und die Verflechtungsvorrichtung (6) freiliegt, wenn die Tür (36) in der offenen Position ist.

9. Mechanismus zum Verleihen einer Verflechtung (5) nach einem der Ansprüche 1 bis 8, wobei das Gehäuse (30) einen Hauptkörperabschnitt (34) und einen Filtergehäuseabschnitt (35), der von dem Hauptkörperabschnitt (34) lösbar ist und das Filter (31) beherbergt, beinhaltet.

10. Mechanismus zum Verleihen einer Verflechtung (5) nach Anspruch 9, wobei das Gehäuse (30) eine zweite Tür (38) beinhaltet, die geöffnet und geschlossen werden kann, nachdem der Filtergehäuseabschnitt (35) von dem Hauptkörperabschnitt (34) gelöst wird.

## Revendications

1. Mécanisme conférant un entrelacement (5) comprenant :
un dispositif d'entrelacement (6) configuré pour entrelacer un fil (Y) en pulvérisant un fluide sur le fil (Y) sur lequel de l'huile a été appliquée ; et
un collecteur d'huile (7) configuré pour recueillir le brouillard d'huile dispersé à partir du dispositif d'entrelacement (6),
le collecteur d'huile (7) incluant :
un boîtier (30) dans lequel le fluide éjecté à partir du dispositif d'entrelacement (6) s'écoule ;
un filtre (31) prévu à l'intérieur du boîtier pour transformer le brouillard d'huile en gouttelettes d'huile ; et
un élément collecteur (33) qui recueille les gouttelettes d'huile formées par le filtre (31),
**caractérisé en ce que**
le boîtier (30) est un élément d'écoulement (30) qui s'étend de manière linéaire, ou incurvée, ou coudée, et
le fluide éjecté à partir du dispositif d'entrelacement (6) s'écoule dans l'élément d'écoulement (30) par une extrémité de l'élément d'écoulement (30), traverse le filtre (31), et puis sort de l'élément d'écoulement (30) par une autre extrémité de l'élément d'écoulement (30).

2. Mécanisme conférant un entrelacement (5) selon la revendication 1, dans lequel le dispositif d'entrelacement (6) inclut un élément de guidage qui est configuré pour amener le fluide éjecté à partir du dispositif d'entrelacement (6) à se diriger vers l'intérieur du boîtier (30).

3. Mécanisme conférant un entrelacement (5) selon la revendication 2, dans lequel le dispositif d'entrelacement (6) inclut :
une portion d'entrelacement (20) présentant un espace de passage du fil (23a) dans lequel le fil (Y) passe et un orifice d'éjection (23b) à travers lequel le fluide est pulvérisé sur le fil (Y) passant dans l'espace de passage du fil (23a) ;
une base (22) soutenant la portion d'entrelacement (20) ; et
un élément de régulation (21) qui fait saillie de la base (22) et croise une ligne d'extension de l'espace de passage du fil (23a), afin de réguler le passage du fil (Y), et
l'élément de régulation (21) fonctionne comme l'élément de guidage (21).

4. Mécanisme conférant un entrelacement (5) selon l'une quelconque des revendications 1 à 3, dans lequel un guide (32) configuré pour guider les gouttelettes d'huile formées par le filtre (31) vers l'élément collecteur (33) est prévu verticalement en dessous du filtre (31), et le dispositif d'entrelacement (6) est prévu verticalement en dessous du collecteur d'huile (7).

5. Mécanisme conférant un entrelacement (5) selon la revendication 4, dans lequel le guide (32) est formé d'au moins un élément à mailles en forme de feuille (32a, 32b).

6. Mécanisme conférant un entrelacement (5) selon la revendication 5, dans lequel le guide (32) est formé par laminage des éléments à mailles (32a, 32b).

7. Mécanisme conférant un entrelacement (5) selon la revendication 6, dans lequel les éléments à mailles incluent au moins deux éléments à mailles (32a, 32b) qui sont différents en termes de taille de mailles.

8. Mécanisme conférant un entrelacement (5) selon l'une quelconque des revendications 1 à 7, dans lequel,
le boîtier (30) inclut une porte (36) qui est mobile entre une position fermée et une position ouverte,
au moins une partie du dispositif d'entrelacement (6) est recouverte lorsque la porte (36) se trouve en position fermée, et le dispositif d'entrelacement (6) est exposé lorsque la porte (36) se trouve en position ouverte.

9. Mécanisme conférant un entrelacement (5) selon l'une quelconque des revendications 1 à 8, dans lequel le boîtier (30) inclut une portion de corps principale (34) et une portion de boîtier de filtre (35) qui peut être détachée de la portion de corps principale (34) et abrite le filtre (31).

10. Mécanisme conférant un entrelacement (5) selon la revendication 9, dans lequel le boîtier (30) inclut une seconde porte (38) qui devient ouvrable et fermable après que la portion de boîtier de filtre (35) est détachée de la portion de corps principale (34).
